# FASCICULE DE BREVET EUROPEEN

(11) **EP 1 502 416 B1**
(45) Date de publication et mention de la délivrance du brevet: **04.10.2006**
(21) Numéro de dépôt: 03715019.0
(22) Date de dépôt: 17.01.2003
(51) Int. Cl.: H04L 29/08

(54) **CHARGEMENT DE DONNEES DANS UN POSTE MOBILE UTILISANT UNE CARTE SIM PRO-ACTIVE**
HERUNTERLADEN VON DATEN AUF EIN MOBILES KOMMUNIKATIONSENDGERÄT UNTER VERWENDUNG EINER PROAKTIVEN SIM-KARTE
METHOD FOR LOADING DATA OR APPLICATIONS IN A MOBILE STATION EQUIPMENT USING A PROACTIVE SIM CARD

(30) Priorité: 17.01.2002 FR 0200543
(43) Date de publication de la demande: 02.02.2005
(73) Titulaire: GEMPLUS, 13420 Gémenos (FR)
(72) Inventeur: SCHIRAR, Stéphane, F-13720 LA BOUILLADISSE (FR); ROCCHI, Jean-Marc, F-13200 ARLES (FR); ARQUES, François-Xavier, 83100 Toulon (FR)
(86) Numéro de dépôt international: PCT/FR2003/000145
(87) Numéro de publication internationale: WO 2003/061247

(56) Documents cités:
- WO-A-00/56030
- "Digital cellular telecommunications system (Phase 2+) (GSM); Specification of the SIM Application Toolkit for the Subscriber Identity Module - Mobile Equipment (SIM - ME) interface (GSM 11.14 version 8.3.0 Release 1999)" ETSI TS 101 267 V8.3.0, [en ligne] août 2000 (2000-08), pages 1-69-114,115, XP002222021 Extrait de l'Internet: <URL:http://pda.etsi.org/pda/queryform.asp > [extrait le 2002-11-21]
- URIEN P: "Internet card, a smart card as a true Internet node" COMPUTER COMMUNICATIONS, ELSEVIER SCIENCE PUBLISHERS BV, AMSTERDAM, NL, vol. 23, no. 17, 1 novembre 2000 (2000-11-01), pages 1655-1666, XP004238469 ISSN: 0140-3664
- CHUNG-HWA RAO H ET AL: "ISMS: AN INTEGRATION PLATFORM FOR SHORT MESSAGE SERVICE AND IP NETWORKS" IEEE NETWORK, IEEE INC. NEW YORK, US, vol. 2, no. 15, mars 2001 (2001-03), pages 48-55, XP001093980 ISSN: 0890-8044

## Description

L'invention concerne les systèmes de téléphonie mobile et, plus particulièrement dans de tels systèmes, un procédé pour charger des données ou des applications en provenance d'un serveur distant dans un circuit intégré équipant un poste ou station téléphonique mobile en mettant en oeuvre des commandes pro-actives de la carte SIM du poste téléphonique mobile.

Il est connu qu'un poste téléphonique d'un système de téléphonie mobile du type GSM (GSM étant l'acronyme de l'expression anglo-saxonne "Global System for Mobile communications") comprend de manière simplificatrice un équipement de communication connu sous l'acronyme ME pour l'expression anglo-saxonne "Mobile Equipment" et une carte de circuit intégré appelée carte SIM, SIM étant l'acronyme de l'expression anglo-saxonne "Subscriber Identity Module". C'est au moment de la remise du téléphone mobile à l'utilisateur/abonné qui contient l'équipement ME, que la carte SIM est placée dans le téléphone mobile pour authentifier l'abonné et les services auxquels il a souscrit par son abonnement. Initialement, la carte SIM était sous le contrôle de l'équipement ME et ne pouvait que répondre aux demandes de l'équipement ME. Mais depuis quelques années, pour répondre à la demande de nouveaux services, il a été proposé des cartes SIM dites pro-actives qui sont capables d'émettre des commandes pro-actives vers le terminal GSM hôte, c'est-à-dire l'équipement ME.

A cet effet, il a été défini par la norme GSM 11-14 de l'ETSI (acronyme de l'expression anglo-saxonne "European Télécommunication Standards Institute") une spécification de commandes pro-actives émises par une carte SIM et des transferts de messages courts vers la carte SIM. Certaines de ces commandes sont définies par un protocole BIP (BIP étant un acronyme pour l'expression anglo-saxonne "Bearer Independent Protocol") qui consiste en cinq nouvelles commandes pro-actives, savoir :
- "OPEN CHANNEL" et "CLOSE CHANNEL" pour ouvrir et fermer un canal de communication sur un support de communication réseau appelé «Bearer» disponible dans le réseau mobile et l'équipement hôte ME,
- "SEND DATA" et "RECEIVE DATA" pour envoyer et recevoir des données sur un canal de communication préalablement ouvert,
- "GET CHANNEL STATUS" pour demander l'état d'un canal précédemment ouvert,
et deux événements :
- "DATA AVAILABLE" pour permettre à l'équipement ME d'informer que des données pour la carte SIM sont disponibles,
- "CHANNEL STATUS" pour informer la carte SIM que l'état du canal a changé, par exemple qu'il a été fermé par le réseau.

Ce protocole BIP est mis en oeuvre grâce à un "outil" incorporé dans la carte SIM et appelé STK, acronyme pour l'expression anglo-saxonne "SIM Tool Kit".

Pour établir une communication entre la carte SIM pro-active et un serveur distant, les opérations sont les suivantes ;
(a) la carte SIM émet la commande "OPEN CHANNEL" vers l'équipement ME en indiquant notamment le mode de communication qu'elle souhaite, l'adresse du serveur destinataire et le port de communication. Les technologies de communications sont par exemple :
   - "GPRS" pour "Général Packet Radio Service", ou
   - "CSD" pour "Circuit Switched Data",
pour définir la couche physique de la communication,
- "TCP" pour "Transport Control Protocol", ou
- "UDP" pour "User Datagram Protocol", pour définir la couche de transport.

Il est remarqué que la carte SIM connaît ce qui est disponible dans l'équipement ME associé car cela lui est transmis par l'équipement ME lors de la mise en marche de ce dernier sous la forme de son profil.
(b) l'équipement ME ouvre un canal de communication GPRS ou CSD via le réseau mobile et informe la carte SIM de son état,
(c) si le canal de communication est ouvert vers le réseau mobile, la carte SIM peut alors échanger des données avec le serveur distant dont elle avait donné l'adresse dans les paramètres de la commande « OPEN CHANNEL »,
(d) la carte SIM émet la commande "CLOSE CHANNEL", ce qui implique que l'équipement ME ferme le canal de communication GPRS ou CSD.

Le protocole BIP permet à la carte SIM d'envoyer et de recevoir des données en provenance d'un serveur distant mais il ne permet pas à l'équipement ME d'en recevoir de ce serveur distant pour son propre compte.

Un but de la présente invention est donc de mettre en oeuvre un procédé pour charger des données ou des applications dans un équipement ME en provenance d'un serveur distant habituellement destiné à échanger des données avec des cartes SIM, par exemple, un serveur distant appelé OTA pour « Over the Air ».

Dans ce but, l'invention propose de mettre en oeuvre le protocole BIP de la carte SIM via l'outil STK, certaines commandes pro-actives du protocole BIP étant complétées par des paramètres pour permettre à l'équipement ME de recevoir des applications ou des données relatives à une application à charger dans l'équipement ME.

L'invention concerne un procédé de chargement de données ou d'applications en provenance d'un serveur distant connecté à un réseau de télécommunication dans un équipement ME de poste mobile capable de se connecter audit réseau de télécommunications, caractérisé en ce qu'il comprend les deux étapes principales suivantes consistant à :
(a) établir un canal de communication selon le protocole BIP entre la carte SIM associée à l'équipement mobile et le serveur distant en affectant un premier port de communication dans la couche de transport pour les données échangées entre la carte SIM et le serveur distant,
(b) utiliser ce canal de communication pour charger les données ou les applications du serveur distant dans l'équipement mobile via un second port de communication de l'équipement mobile.

D'autres caractéristiques et avantages de la présente invention apparaîtront à la lecture de la description suivante d'un exemple particulier de réalisation, ladite description étant faite en relation avec les dessins joints dans lesquels.
- la figure 1 est un schéma montrant les liaisons entre le serveur distant, le réseau, l'équipement mobile ME et la carte SIM, selon l'invention, et
- la figure 2 est un schéma montrant les transmissions de données ou d'applications entre la carte SIM, l'équipement mobile ME et un serveur distant du réseau, selon l'invention.

Le procédé de chargement des données en provenance d'un serveur distant 10 (ou SR) (dit OTA pour l'expression anglo-saxonne "Over The Air") connecté à un réseau de télécommunication 12, dans un équipement mobile 14 (ou ME) d'une station mobile 30 (ou MS) susceptible de se connecter au réseau 12 comprend les deux étapes principales suivantes :
(a) établir un canal de communication 32 selon le protocole BIP entre une carte SIM 16 et le serveur distant SR 10 via l'équipement mobile 14 (ME), et
(b) utiliser ce canal de communication 32 pour transférer les données ou les applications du serveur distant 10 dans l'équipement mobile 14.

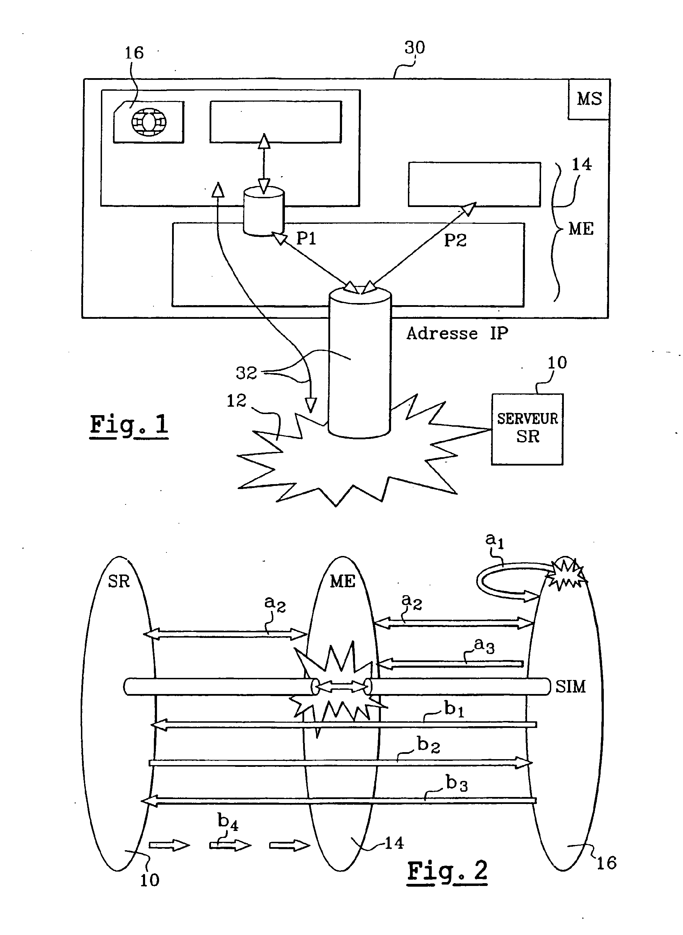

Plus précisément, l'étape principale (a) ci-dessus comprend, par exemple, les sous-étapes suivantes (figure 2) :
(a₁) requérir, par l'utilisateur de la station mobile 30 (ou MS), un chargement de données ou d'applications dans l'équipement mobile 14 en utilisant une application STK de la carte SIM ou une application de l'équipement mobile ME,
(a₂) établir un canal de communication selon le protocole BIP entre la carte SIM 16 et le serveur distant 10 via un premier numéro port de communication P1, et
(a₃) fournir par la carte SIM 16 à l'équipement mobile hôte 14, un deuxième numéro de port P2 pour les futurs chargements de données ou d'applications effectués par le serveur distant 10 dans l'équipement mobile 14.

Au lieu d'être fourni par la carte SIM 16, ce deuxième numéro de port P2 peut être prédéfini dans l'équipement mobile et connu par le serveur distant.

La deuxième étape principale (b) comprend les sous-étapes suivantes :
(b₁) fournir au serveur distant 10, via le canal de communication, le deuxième numéro de port de communication P2 de l'équipement mobile 14 et le type de ce dernier pour identification dans la base de données du serveur distant 10, de manière à permettre la communication entre le serveur distant 10 et l'équipement mobile 14,
(b₂) fournir à la carte SIM 16 la liste des applications ou données auxquelles l'abonné authentifié par la carte SIM a accès pour un chargement dans l'équipement mobile 14 considéré,
(b₃) sélectionner l'application ou les données de chargement souhaitées dans la liste, et
(b₄) transmettre par le serveur distant 10 les données ou les applications sélectionnées dans l'équipement mobile 14, via le port P2 du canal de communication ouvert par la carte SIM 16.

Pour réaliser les différentes étapes et sous-étapes décrites ci-dessus, l'invention propose d'utiliser un nouveau paramètre dans la commande pro-active "OPEN CHANNEL" du protocole BIP qui est appelé "Notification d'un chargement de données ou d'applications dans un équipement mobile ME"

Ce nouveau paramètre peut être défini comme suit :
- la présence de ce nouveau paramètre indique à l'équipement mobile 14 qu'un chargement de données ou d'applications sera effectué par le serveur distant 10 avec lequel la carte SIM est en liaison,
- un champ de ce nouveau paramètre est utilisé pour indiquer, éventuellement, le numéro de port P2 sur lequel l'équipement mobile doit recevoir pour lui-même les données ou applications à charger.

Lorsque l'équipement mobile 14 reçoit une commande "OPEN CHANNEL" avec ce nouveau paramètre, il ouvre un canal de communication en utilisant les informations fournies par cette commande, savoir :
- le mode de communication tel que le "GPRS" ou le "CSD" pour définir la couche physique de la communication, qui est indiqué par le paramètre TLV appelé "Bearer description", TLV étant l'acronyme de "Tag Length Value"
- la couche de transport telle que "TCP" ou "UDP" qui est indiquée par le paramètre TLV appelé "SIM/ME interface transport level",
- l'adresse du serveur distant qui est indiquée par le paramètre TLV "Data destination address",
- si le canal de communication est établi par l'équipement mobile, un port de couche de transport "TCP" ou "UDP" est affecté de manière interne pour la carte SIM et un canal de communication de type BIP est considéré comme étant établi entre la carte SIM et l'équipement de poste mobile.

Le paramètre TLV de notification de chargement de l'équipement mobile, qui est ajouté à la commande "OPEN CHANNEL", induit les opérations suivantes :
- dans le cas où la carte SIM fournit le numéro de port P2, l'extraction de ce numéro de port par l'équipement de poste mobile ME qui recevra les données ou applications à charger par le serveur distant, dans l'équipement ME,
- dans le cas où le numéro de port P2 n'est pas indiqué, l'équipement ME sélectionne un numéro de port par défaut ou prédéfini,
- l'équipement ME démarre une application par un serveur interne au-dessus de la couche transport "TCP" ou "UDP" utilisée par la carte SIM selon le paramètre TLV "SIM/ME Interface Transport Level" en provenance du serveur distant ; cette application ou serveur interne aura en charge de réceptionner sur le port P2 toutes les données ou applications en provenance du serveur distant,
- au cas où l'équipement ME ne peut pas démarrer le serveur interne, un message d'erreur est envoyé à la carte SIM, par exemple par "CHANNEL STATUS" ou via une commande "TERMINAL RESPONSE" en réponse à la commande pro-active "OPEN CHANNEL".

La mise en oeuvre du procédé selon l'invention implique certaines modifications dans la carte SIM, l'équipement ME et le serveur.

Ainsi, la carte SIM doit être capable :
- de connaître les informations de connexion du serveur distant, c'est-à-dire l'adresse IP, le numéro de port , la sélection GPRS ou CSD, ...
- d'indiquer à l'équipement ME et au serveur distant qu'un chargement de données ou d'applications sera effectué dans l'équipement ME,
- de fournir à l'équipement ME et au serveur distant le numéro de port P2 à utiliser par ce dernier pour ce chargement.

L'équipement ME doit être capable :
- de mettre en oeuvre un serveur interne à l'équipement ME capable de recevoir des données ou applications en provenance d'un serveur distant,

Le serveur distant doit être capable :
- de connaître les profils des équipements ME et des cartes SIM,
- d'envoyer des données à une carte SIM distante,
- d'envoyer des données à un équipement ME.

Il sera maintenant décrit un exemple de communication établie selon le procédé de l'invention.
- l'utilisateur de la station mobile MS sélectionne dans la carte SIM une application en utilisant l'outil STK,
- l'utilisateur sélectionne éventuellement dans un menu, via une application STK, l'application à télécharger (musique, jeu, utilitaire, ...),
- la carte SIM choisit, par exemple, un numéro de port P2, P2 devant servir aux chargements de données ou d'applications entrantes du serveur distant 10 sur l'équipement ME,
- la carte SIM commence une communication avec le serveur à l'aide de la commande pro-active "OPEN CHANNEL" transmise à l'équipement ME, cette commande contenant :

- le type de communication souhaité (GPRS ou CSD, TCF ou UDP, etc)
- l'adresse du serveur de destination et le numéro de port P1,
- le numéro de port P2 du ME pour recevoir des données du serveur distant,
- l'indication de démarrer le serveur interne à l'équipement ME pour l'application de chargement.
- l'équipement ME ouvre un canal de communication (GPRS ou CSD) avec le réseau et informe la carte SIM du statut,
- simultanément, l'équipement ME lance le serveur interne en charge d'écouter d'éventuels téléchargements de données sur le port P2 de la couche de transport fournie par la carte SIM,
- la carte SIM envoie au serveur OTA le numéro de port P2 d'écoute de l'équipement ME, et l'identité IMEI (International Mobile Equipment Identity) de l'équipement ME
- le serveur vérifie le droit d'accès à un chargement de l'utilisateur ainsi que l'identité IMEI de l'équipement ME et envoie sa réponse à la carte SIM,
- en cours d'échanges de données entre la carte SIM et le serveur distant, l'utilisateur reçoit les applications ou données qu'il peut télécharger et sélectionner l'une de ces dernières qu'il souhaite charger dans l'équipement ME,
- le serveur OTA envoie les données ou applications à l'équipement ME avec la même adresse IP que la carte SIM mais avec le numéro de port P2 sur lequel l'équipement ME écoute,
- après chargement complet des données ou applications, le serveur OTA informe la carte SIM de la fin du chargement,
- la carte SIM ferme le canal BIP par la commande pro-active "CLOSE CHANNEL", ce qui implique que l'équipement ME arrête ses communications GPRS ou CSD avec le réseau.

L'invention a été décrite dans le cas d'un chargement d'applications ou de données du serveur distant vers l'équipement ME mais elle peut être mise en oeuvre dans le cas de transferts de données d'applications de l'équipement mobile vers le serveur distant.

## Revendications

1. Procédé de chargement de données ou d'applications en provenance d'un serveur distant SR (10) connecté à un réseau de télécommunication (12) dans un équipement mobile ME (14) d'une station mobile MS (30) capable de se connecter audit réseau de télécommunication (12), **caractérisé en ce qu'**il comprend les deux étapes principales suivantes consistant à :
(a) établir un canal de communication (32) selon le protocole BIP entre la carte SIM (16) associée à l'équipement mobile (14) et le serveur distant (10) en affectant un premier numéro de port de communication (P1) dans la couche de transport pour les données échangées entre la carte SIM et le serveur distant (10),
(b) utiliser ce canal de communication (32) pour charger les données ou les applications du serveur distant (10) dans l'équipement mobile (14) via un second port (P2) de communication de l'équipement mobile (14).

2. Procédé selon la revendication 1, **caractérisé en ce que** l'étape (a) comprend les sous-étapes suivantes consistant à :
(a₁) réception, par la station mobile MS, d'une demande dechargement des données ou d'applications correspondant à une application dans l'équipement mobile ME (14),
(a₂) établir le canal de communication (32) selon le protocole BIP entre la carte SIM (16) et le serveur SR (10), et
(a₃) affecter par l'équipement ME (14) le numéro de port (P1) à la carte SIM (16) permettant le routage des données à destination de cette dernière.

3. Procédé selon la revendication 1 ou 2, **caractérisé en ce que** l'étape (b) comprend les sous-étapes suivantes consistant à :
(b₁) fournir au serveur distant SR (10) via le canal de communication sur le port (P1) le numéro du second port de communication (P2) devant être utilisé par l'équipement mobile ME (14) uniquement et le type de l'équipement mobile de manière à permettre la communication entre le serveur distant SR (10) et l'équipement mobile ME (14),
(b₂) fournir à la carte SIM (16) la liste des données ou applications auxquelles l'abonné authentifié par la carte SIM a accès pour un chargement dans l'équipement mobile ME (14),
(b₃) réceptioner, par le serveur SR, la sélection de l'utilisateur dans la liste de l'application ou des données de chargement souhaitée, et
(b₄) transmettre par le serveur SR (10) les données ou les applications sélectionnées dans l'équipement mobile ME (14) via le second port (P2) du canal de communication établi par la carte SIM (16).

4. Procédé selon la revendication 3, **caractérisé en ce qu'**il comprend en outre une sous-étape consistant à :
(b₅) transmettre par l'équipement ME (14) des données ou des applications vers le serveur distant via le second port (P2) du canal de communication établi par la carte SIM (16).

5. Procédé selon l'une des revendications 2, 3 ou 4, **caractérisé en ce que** la sous-étape (a₁) est mise en oeuvre par l'ajout d'un paramètre (TLV) optionnel dans la commande "OPEN CHANNEL" de la norme ETSI-GSM 11-14 .

6. Procédé selon la revendication 5, **caractérisé en ce que** ledit paramètre (TLV) optionnel comprend, en outre, le numéro du deuxième port de communication (P2).

7. Procédé selon la revendication 3, **caractérisé en ce que** la sous-étape (b₁) est mise en oeuvre par l'ajout d'un deuxième paramètre (TLV) optionnel dans la commande "OPEN CHANNEL" indiquant le deuxième numéro de port (P2).

8. Procédé selon la revendication 3, **caractérisé en ce que** le deuxième numéro de port (P2) est prédéfini dans l'équipement ME (14).

9. Procédé selon l'une quelconque des revendications 2 à 8, **caractérisé en ce que** le numéro du deuxième port (P2) effectivement utilisé par l'équipement mobile ME (14) est transmis à la carte SIM via la commande "TERMINAL RESPONSE" en réponse à la commande pro-active "OPEN CHANNEL".

10. Procédé selon la revendication 9, **caractérisé en ce que** le numéro du deuxième port (P2) est transmis au serveur distant par la carte SIM.

## Claims

1. Method of loading data or applications from a remote server SR (10) connected to a telecommunications network (12) in the mobile equipment ME (14) of a mobile station MS (30) that is capable of connecting to said telecommunications network (12), **characterised in that** it comprises the following two main steps consisting of:
(a) setting up a communication channel (32) using the BIP between the SIM card (16) associated with the mobile equipment (14) and the remote server (10) by allocating a first communication port (P1) in the transport layer for the data exchanged between the SIM card and the remote server (10),
(b) using this communication channel (32) for loading the data or applications of the remote server (10) in the mobile equipment (14) by means of a second communication port (P2) of the mobile equipment (14).

2. Method according to claim 1, **characterised in that** step (a) comprises the following sub-steps consisting of:
(a₁) the mobile station MS receiving a request for loading data or applications corresponding to an application in the mobile equipment ME (14),
(a₂) setting up the communication channel (32) according to the BIP between the SIM card (16) and the remote server SR (10), and
(a₃) the ME (14) allocating the port number (P1) to the SIM card (16) such as to enable the routing of data intended for the latter.

3. Method according to claim 1 or 2, **characterised in that** step (b) comprises the following sub-steps consisting of:
(b₁) supplying the remote server SR (10) via the communication channel on the port (P1) with the number of the second communication port (P2) that must be used by the mobile equipment ME (14) only and the type of the mobile equipment so as to enable communication between the remote server SR (10) and the mobile equipment ME (14),
(b₂) supplying the SIM card (16) with the list of the applications or data to which the subscriber authenticated by the SIM card has access for loading them in the mobile equipment ME (14),
(b₃) the server SR receiving the user's selection from the list of the applications or data which the user wants to load, and
(b₄) the remote server SR (10) sending the selected data or applications to the mobile equipment ME (14), via the second port (P2) of the communication channel opened by the SIM card (16).

4. Method according to claim 3, **characterised in that** it also comprises a sub-step consisting of:
(b₅) the ME (14) sending data or applications to the remote server via the second port (P2) of the communication channel set up by the SIM card (16).

5. Method according to one of the claims 2, 3 or 4, **characterised in that** sub-step (a₁) is implemented by adding an optional parameter (TLV) to the "OPEN CHANNEL" command of the ETSI-GSM 11-14 standard.

6. Method according to claim 5, **characterised in that** said optional parameter (TLV) also contains the number of the second communication port (P2).

7. Method according to claim 3, **characterised in that** sub-step (b₁) is implemented by adding a second optional parameter (TLV) to the "OPEN CHANNEL" command indicating the second port number (P2).

8. Method according to claim 3, **characterised in that** the second port number (P2) is predefined in the ME (14).

9. Method according to any one of the claims from 2 to 8, **characterised in that** the number of the second port (P2) actually used by the mobile equipment ME (14) is sent to the SIM card via the "TERMINAL RESPONSE" command in response to the proactive "OPEN CHANNEL" command.

10. Method according to claim 9, **characterised in that** the number of the second port (P2) is sent to the remote server by the SIM card.

## Patentansprüche

1. Verfahren zum Herunterladen von Daten oder Anwendungen von einem an ein Telekommunikationsnetz (12) in einer mobilen Ausrüstung ME (14) einer mobilen Station MS (30) angeschlossenen entfernten Server SR (10), die fähig ist, sich an das genannte Telekommunikationsnetz (12) anzuschließen, **dadurch gekennzeichnet, dass** es die folgenden beiden Hauptschritte umfasst, die aus Folgendem bestehen:
(a) Herstellung eines Kommunikationskanals (32) gemäß dem Protokoll BIP zwischen der der mobilen Ausrüstung (14) und dem entfernten Server (10) zugeordneten Karte SIM (16) durch Zuordnen einer ersten Nummer des Kommunikationsports (P1) in der Transportschicht für die zwischen der Karte SIM und dem entfernten Server (10) ausgetauschten Daten,
(b) Einsatz dieses Kommunikationskanals (32) zum Laden der Daten oder Anwendungen vom entfernten Server (10) in die mobile Ausrüstung (14) über einen zweiten Kommunikationsport (P2) der mobilen Ausrüstung (14).

2. Verfahren gemäß Anspruch 1, **dadurch gekennzeichnet, dass** der Schritt (a) die folgenden Unterschritte umfasst, die aus Folgendem bestehen:
(a₁) Empfang einer Ladeanfrage von einer Anwendung in der mobilen Ausrüstung ME (14) entsprechenden Daten oder Anwendungen in der mobilen Station MS,
(a2) Herstellung des Kommunikationskanals (32) zwischen der Karte SIM (16) und dem Server SR (10) gemäß dem Protokoll BIP und
(a₃) Zuordnung der Portnummer (P1) der Karte SIM (16) durch die Ausrüstung ME (14), was das Routen der für Letztere bestimmten Daten erlaubt.

3. Protokoll gemäß Anspruch 1 oder 2, **dadurch gekennzeichnet, dass** der Schritt (b) die folgenden Unterstufen umfasst, die aus Folgendem bestehen:
(b₁) Lieferung der Nummer des zweiten Kommunikationsports (P2), der ausschließlich von der mobilen Ausrüstung ME (14) genutzt werden muss, an den entfernen Server SR (10) über den Kommunikationskanal (P2), sowie des Typs der mobilen Ausrüstung, so dass die Kommunikation zwischen dem entfernten Server SR (10) und der mobilen Ausrüstung ME (14) erlaubt wird,
(b₂) Der Karte SIM 16 die Liste der Anwendungen oder Daten liefern, auf die der durch die Karte SIM authentifizierte Teilnehmer für ein Laden in die betrachtete mobile Ausrüstung 14 Zugriff hat,
(b₃) Empfang der Auswahl des Benutzers der gewünschten herunter zu ladenden Anwendung oder der gewünschten herunter zu ladenden Daten in der Liste durch den Server SR und
(b₄) Übertragung der ausgewählten Daten oder Anwendungen durch den Server SR (10) in der mobilen Ausrüstung ME (14) über den zweiten Port (P2) des von der Karte SIM (16) hergestellten Kommunikationskanals.

4. Verfahren gemäß Anspruch 3, **dadurch gekennzeichnet, dass** es darüber hinaus einen Unterschritt umfasst, der aus Folgendem besteht:
(b₅) Übertragung der Daten oder Anwendungen durch die Ausrüstung ME (14) auf den entfernten Server über den zweiten Port (P2) des durch die Karte SIM (16) hergestellten Kommunikationskanals.

5. Verfahren gemäß Anspruch 2, 3 oder 4, **dadurch gekennzeichnet, dass** der Unterschritt (a₁) durch das Hinzufügen eines optionalen Parameters (TLV) in dem Befehl "OPEN CHANNEL" der Norm ETSI-GSM 11-14 umgesetzt wird.

6. Verfahren gemäß Anspruch 5, **dadurch gekennzeichnet, dass** der genannte optionale Parameter (TLV) darüber hinaus die Nummer des zweiten Kommunikationsports (P2) umfasst.

7. Verfahren gemäß Anspruch 3, **dadurch gekennzeichnet, dass** der Unterschritt (b₁) durch das Hinzufügen eines zweiten optionalen Parameters (TLV) in dem die zweite Portnummer (P2) anzeigenden Befehl "OPEN CHANNEL" umgesetzt wird.

8. Verfahren gemäß Anspruch 3, **dadurch gekennzeichnet, dass** die zweite Portnummer (P2) in der Ausrüstung ME (14) vordefiniert ist.

9. Verfahren gemäß Anspruch 2 bis 8, **dadurch gekennzeichnet, dass** die Nummer des effektiv von dem Befehl "TERMINA RESPONSE" genutzten zweiten Ports (P2) als Antwort auf die proaktive Steuerung "OPEN CHANNEL" von der mobilen Ausrüstung ME (14) auf die Karte SIM übertragen wird.

10. Verfahren gemäß Anspruch 9, **dadurch gekennzeichnet, dass** die Nummer des zweiten Ports (P2) durch die Karte SIM auf den entfernten Server übertragen wird.
